# EUROPÄISCHE PATENTANMELDUNG

(11) **EP 4 575 240 A1**
(43) Veröffentlichungstag der Anmeldung: **25.06.2025**
(21) Anmeldenummer: 24220439.4
(22) Anmeldetag: 17.12.2024
(51) Int. Cl.: F16B 15/00, F16B 15/08, F16B 33/00

(54) **BEFESTIGUNGSELEMENT UND BEFESTIGUNGSELEMENTSTREIFEN**

(30) Priorität: 19.12.2023 DE 102023135852
(71) Anmelder: Raimund Beck Nageltechnik GmbH, 5270 Mauerkirchen (AT)
(72) Erfinder: Siemers, Stefan, 84489 Burghausen (DE)
(74) Vertreter: Paul & Albrecht Patentanwälte PartG mbB

(57) **Zusammenfassung**

Befestigungselement (1), insbesondere in Form eines Nagels, einer Schraube, eines Schraubnagels oder einer Klammer, wobei das Befestigungselement (1) Vulkanfiber aufweist oder aus Vulkanfiber besteht.

## Beschreibung

Die vorliegende Erfindung betrifft ein Befestigungselement, insbesondere in Form eines Nagels, einer Schraube, eines Schraubnagels oder einer Klammer, sowie einen solche Befestigungselemente aufweisenden Befestigungselementstreifen.

Befestigungselemente in Form von Nägeln, Schrauben, Schraubnägeln und Klammern sind seit langer Zeit bekannt und werden dazu eingesetzt, Werkstücke miteinander zu verbinden. Sie werden überwiegend aus Metall hergestellt, beispielsweise aus Stahl, Aluminium, Kupfer oder dergleichen. Metallische Befestigungselemente sind jedoch mit Nachteilen behaftet. So neigen sie trotz Korrosionsschutzmaßnahmen wie z.B. Verzinken unter ungünstigen Bedingungen zum Rosten, und zwar insbesondere dann, wenn in dem Werkstoff des Werkstückes, in welches das Befestigungselement eingetrieben wird, saure Bedingungen herrschen. Dies gilt vor allem für gerbstoffreiche Hölzer, die wegen ihrer Dauerhaftigkeit im Außenbereich beispielsweise für Fassaden und Terrassen eingesetzt werden. Bei Bewitterung können unerwünschte dunkle bis schwarze Verfärbungen an den Befestigungsstellen entstehen, was nicht wünschenswert ist. Eine Abhilfe durch Verwendung rostfreier Befestigungselemente ist möglich aber sehr kostenaufwendig. Ein weiterer Nachteil besteht darin, dass sich das Recycling von mit metallischen Befestigungselementen durchsetzten Holzprodukten aufwendig gestaltet. Zur Behebung dieser Nachteile wurden beispielsweise Nägel vorgeschlagen, die zumindest überwiegend aus lignocellulosischem Material hergestellt sind, wie beispielsweise aus Holz oder verholztem Pflanzenmaterial in Form von Bambus oder dergleichen. Der Einsatz solcher Nägel hat sich in der Praxis grundsätzlich bewährt. Ein Nachteil von Nägeln aus lignocellulosischem Material besteht allerdings darin, dass diese zum Sprödbruch neigen.

Ausgehend von diesem Stand der Technik ist es eine Aufgabe der vorliegenden Erfindung, ein verbessertes alternatives Befestigungselement der eingangs genannten Art zu schaffen.

Zur Lösung dieser Aufgabe schafft die vorliegende Erfindung ein Befestigungselement, insbesondere in Form eines Nagels, einer Schraube, eines Schraubnagels oder einer Klammer, das erfindungsgemäß dadurch gekennzeichnet, ist, dass es Vulkanfiber aufweist oder aus Vulkanfiber besteht, wobei es sich bei dem Vulkanfieber insbesondere um ein additivfreies Cellulose-Naturprodukt handelt.

Der Werkstoff Vulkanfiber kann als ökologisch unbedenklich angesehen werden, da er sich kompostieren und biologisch rückstandsfrei zu CO₂ und Wasser abbauen lässt. Bei der Kompostierung verbleiben im Gegensatz zu vielen anderen biobasierten Kunststoffen keinerlei Rückstände in Form von Müll oder Mikropartikeln. Vor diesem Hintergrund weist Vulkanfiber gegenüber metallischen Werkstoffen unter umwelttechnischen Gesichtspunkten deutliche Vorteile auf und ist mit lignocellulosischem Material gleichzusetzten. Letzterem gegenüber weist Vulkanfiber jedoch den Vorteil auf, dass es deutlich elastischer ist, weshalb Sprödbrüche von aus Vulkanfiber hergestellten Befestigungselementen nicht zu befürchten sind. Weitere positive Eigenschaften von Vulkanfiber sind eine hohe mechanische Festigkeit, eine schwere Entflammbarkeit, ein vergleichsweise geringes Gewicht und eine gute elektrische Isolation, um nur einige Aspekte zu nennen.

Gemäß einer Ausgestaltung der vorliegenden Erfindung ist ein Bereich des Befestigungselementes, der zum Eintreiben oder Einschrauben in ein Werkstück bestimmt ist, wie beispielsweise der Schaft eines Nagels, einer Schraube oder eines Schraubnagels oder die Schäfte einer Klammer, mit einer Vulkanfiber aufweisenden Außenbeschichtung versehen. Der Rest des Befestigungselementes kann beispielsweise lignocellulosisches Material oder dergleichen aufweisen oder daraus bestehen. Untersuchungen haben ergeben, dass mit einer solche Vulkanfiberpartikel aufweisenden Außenbeschichtung die Ausziehkräfte aus insbesondere feuchten Holzwerkstücken erhöht werden können, da die Vulkanfiberpartikel mit Feuchtezunahme aufquellen.

Die Außenbeschichtung weist vorteilhaft ein Bindematerial auf, insbesondere in Form eines Lacks, eines Leims oder eines Klebstoffs, bevorzugt eines Nitrozellulose-Klebstoffs, in dem Vulkanfiberpartikel dispergiert sind. Entsprechend kann die Außenbeschichtung einfach nach Art einer Flüssigkeit oder Paste aufgetragen werden.

Gemäß einer Ausgestaltung der vorliegenden Erfindung handelt es sich bei dem Befestigungselement um einen Nagel, der einen eine Längsachse definierenden Schaft und eine an dessen vorderem Ende angeordnete Spitze aufweist oder aus einem solchen Schaft und einer solchen Spitze besteht. Der Nagel ist dabei bevorzugt für den Einsatz in einem Befestigungselement- bzw. Nagelsetzgerät ausgelegt.

Gemäß einer ersten Variante der vorliegenden Erfindung weist der Schaft einen kreisrunden Querschnitt auf. Derartige Befestigungselemente mit einem kreisrunden Querschnitt lassen sich in einfacher Weise durch Drehen oder Drechseln aus einem Stangenmaterial herstellen.

Die Spitze ist bevorzugt als kegelförmige Rundspitze ausgebildet, deren Länge insbesondere wenigstens anderthalbmal so groß ist wie die kleinste Dicke des Schafts. Es hat sich gezeigt, dass Nägel mit einer solchen Rundspitze hohe Auszugsfestigkeiten erzielen. Auch hat die Geometrie der Spitze einen erheblichen Einfluss auf die Struktur des Einschusskanals im Übergang vom Befestigungselement zur Werkstoffmatrix des Werkstückes, in das das Befestigungselement eingetrieben wird. Es hat sich gezeigt, dass bei hölzernen Werkstücken Faserausbrüche entlang des Einschusskanals der Befestigungselemente weitgehend vermieden werden können und die Holzmatrix eng am Befestigungselement anliegt. Ferner verdichten die Befestigungselemente beim Einschießen die Zellstruktur entlang des Einschusskanals und biegen sie in Schussrichtung. Der Spitzenwinkel der Spitze ist bevorzugt ≥ 36° und besser noch ≥ 40°, und liegt insbesondere im Bereich von 45° und 60° und beträgt bevorzugt 45° oder 60°. Es hat sich gezeigt, dass Nägel, bei denen die Spitzenwinkel in den angegebenen Bereichen liegen und insbesondere größer als 50° sind, eine deutlich geringere Spaltwirkung auf genagelte Bauteile ausüben als Nägel, deren Spitzenwinkel kleiner sind, beispielsweise bei 20° liegen. Alternativ kann die Spitze aber auch als eine ballistisch geformte Spitze ausgebildet oder pyramidal geformt sein.

Vorteilhaft ist an dem hinteren Ende des Schaftes ein gegenüber dem Schaft verbreitert ausgebildeter Kopf vorgesehen ist, der bevorzugt einen kreisrunden Querschnitt aufweist. Dank eines solchen Kopfes kann unter anderem die Durchzugsfestigkeit des Nagels gegenüber einem Nagel ohne Kopf deutlich erhöht werden.

Vorteilhaft sind der Schaft und der Kopf durch einen sich zum Kopf aufweitenden Übergangsbereich miteinander verbunden, dessen ringförmige Außenfläche bevorzugt zur Längsachse hin konkav gekrümmt ist. Derartige Nägel eignen sich besonders dazu, Fassadenplatten an einer Unterkonstruktion, beispielsweise an einer Holzkonstruktion zu befestigen. Aufgrund des kreisrunden, gegenüber dem Schaft verdicken Kopfes in Kombination mit dem sich aufweitenden Übergangsbereich, der eine konkav, d.h. nach innen hin zur Längsachse gekrümmte Außenfläche besitzt, wird eine hervorragende Auszugsfertigkeit des Befestigungselementes erzielt. Ferner werden die Fassadenplatten durch den Übergangsbereich und den Kopf zusätzlich abgestützt, so dass ein sicherer Halt der Fassadenplatten an der Unterkonstruktion sichergestellt werden kann.

Der Querschnitt des Kopfes ist bevorzugt konstant oder erweitert sich zum hinteren freien Ende des Befestigungselementes hin kontinuierlich.

Der Schaft umfasst gemäß einer Ausgestaltung der vorliegenden Erfindung einen vorderen, einen ersten Durchmesser aufweisenden Schaftabschnitt und einen hinteren, einen zweiten Durchmesser aufweisenden Schaftabschnitt, wobei der zweite Durchmesser größer als der erste Durchmesser ist, und wobei die Spitze am vorderen Ende des vorderen Schaftabschnitts angeordnet ist. Die ersten und zweiten Durchmesser sind dabei über die zugehörigen Schaftabschnitte bevorzugt konstant, so dass der vordere Schaftabschnitt und der hintere Schaftabschnitt jeweils einen einheitlichen Durchmesser aufweisen. Der wesentliche Vorteil eines derart ausgebildeten Befestigungselementes besteht darin, dass die Spaltwirkung, die mit dem Eintreiben des Befestigungselementes in ein Bauteil, insbesondere in ein hölzernes Bauteil einhergeht, Dank der Tatsache, dass der vordere Schaftabschnitt mit einem kleineren Durchmesser als der hintere Schaftabschnitt versehen ist, deutlich reduziert wird, weshalb Beschädigungen am Bauteil minimiert werden. Der größere Durchmesser des hinteren Schaftabschnitts sorgt für die erforderliche Festigkeit. Vorteilhaft entspricht der zweite Durchmesser dem 1,3- bis 1,5-fachen des ersten Durchmessers. Gemäß einer Ausgestaltung der vorliegenden Erfindung liegt der erste Durchmesser im Bereich von 2,4 bis 3,2 mm und der zweite Durchmesser im Bereich von 3,1 bis 3,9 mm. Bevorzugt weist der vordere Schaftabschnitt eine geringere Länge als der hintere Schaftabschnitt auf. Dies hat bei den meisten Anwendungsfällen, in denen zwei Bauteile miteinander verbunden werden, zur Folge, dass sich der hintere Schaftabschnitt vollständig durch das äußere Bauteil und teilweise durch das innere Bauteil erstreckt, wenn das Befestigungselement von außen nach innen eingetrieben wird. Entsprechend wird durch den hinteren Schaftabschnitt auch innerhalb der zwischen den Bauteilen vorhandenen Fuge eine sehr hohe Scherfestigkeit gewährleistet. Vorteilhaft entspricht die Länge des vorderen Befestigungselementabschnitts zwischen 20% und 40%, insbesondere zwischen 25% und 35% der Gesamtlänge des Befestigungselementes und/oder die Länge des hinteren Befestigungselementabschnitts zwischen 45% und 60% der Gesamtlänge des Befestigungselementes. Mit derartigen Längen wurden insbesondere bei Nägeln sehr gute Ergebnisse erzielt. Zwischen dem vorderen Schaftabschnitt und dem hinteren Schaftabschnitt ist bevorzugt ein insbesondere kegelstumpfförmiger Übergangsabschnitt vorgesehen, in dem der erste Durchmesser konisch in den zweiten Durchmesser übergeht, wobei der Öffnungswinkel des Übergangsabschnitts bevorzugt im Bereich zwischen 55 und 65° liegt, insbesondere 60° beträgt. Ein solcher Übergangsabschnitt erleichtert ein ordnungsgemäßes Eintreiben des Befestigungselementes. Gemäß einer Ausgestaltung der vorliegenden Erfindung ist ein am hinteren Ende des hinteren Schaftabschnitts angeordneter, gegenüber dem Schaft verbreitert ausgebildeten Kopf vorgesehen. Der Kopf weist zur Vereinfachung der Herstellung vorteilhaft einen kreisrunden Querschnitt mit einem dritten Durchmesser aufweist, der bevorzugt dem 1,1 bis 1,3-fachen des zweiten Durchmessers entspricht, insbesondere dem 1,2-fachen. Zwischen dem hinteren Schaftabschnitt und dem Kopf ist bevorzugt ein insbesondere kegelstumpfförmiger Übergangsbereich vorgesehen, in dem der zweite Durchmesser konisch in den dritten Durchmesser übergeht, wobei der Öffnungswinkel des Übergangsbereichs bevorzugt im Bereich zwischen 55 und 65° liegt, insbesondere 60° beträgt. Ein solcher Übergangsbereich verbessert die Durchzugsfestigkeit. Zur weiteren Unterstützung der Durchzugsfestigkeit kann vorgesehen sein, dass der Übergangsbereich unmittelbar an der vorderen Stirnfläche, insbesondere der vorderen äußeren Umfangskante des Kopfes beginnt. Bevorzugt weist das Befestigungselement eine Gesamtlänge von wenigstens 30 mm und/oder von maximal 60 mm, insbesondere von maximal 50 mm auf, und die Gesamtlänge beträgt bevorzugt 40 mm. Der Spitzenwinkel der Spitze liegt hier bevorzugt im Bereich von 60 bis 120° und beträgt insbesondere 90° ± 3°.

Gemäß einer Ausführungsform der vorliegenden Erfindung kann der Schaft einen seinem hinteren Schaftabschnitt Verankerungsstrukturen aufweisen, die jeweils einen sich zur Spitze konisch verjüngenden Strukturabschnitt aufweisen, wobei die Verankerungsstrukturen bevorzugt in gleicher Weise ausgebildet sind. Damit wird dem Umstand Rechnung getragen, dass gemäß gängigen Normen im Holzbau ein profilierter Schaft für dauerhaft statischen Auszug erforderlich ist. Dabei können die Verankerungsstrukturen einen maximalen Strukturdurchmesser aufweisen, der größer, insbesondere um wenigstens 1,5 % und/oder um maximal 3% größer, bevorzugt um 2 bis 2,2 % größer, als der Schaftdurchmesser des axial hinteren Schaftabschnitts ist, der sich an den Übergangsbereich anschließt. Bei einer besonders bevorzugten Ausführungsform der Erfindung beträgt der maximale Strukturdurchmesser 4,8 mm. Diese Ausgestaltung ist besonders sinnvoll, wenn der Schaft in seinem zum Übergangsbereich benachbarten axialen Endabschnitt einen Durchmesser von 4,7 mm aufweist. Die Verankerungsstrukturen weisen bei einer Ausführungsform der Erfindung einen minimalen Strukturdurchmesser auf, der kleiner, insbesondere um wenigstens 8% und/oder maximal 12% kleiner, bevorzugt um 8,3 bis 8,7 % kleiner als der Schaftdurchmesser des hinteren Schaftabschnitts ist, der sich an den Übergangsbereich anschließt. Bevorzugt beträgt der minimale Schaftdurchmesser 4,3 mm. Eine weitere Ausgestaltung der Ausführungsform mit Verankerungsstrukturen zeichnet sich dadurch aus, dass der maximale Strukturdurchmesser jeweils am zum Kopf weisenden hinteren Ende der sich konisch verjüngenden Strukturabschnitte und der minimale Strukturdurchmesser an deren vorderen Enden vorhanden sind. Bei einer vorteilhaften Weiterbildung dieser Ausführung ist vorgesehen, dass die Verankerungsstrukturen einen in der Längsrichtung hinter den sich konisch verjüngenden Strukturabschnitten liegenden zweistufigen Übergangsabschnitt aufweisen, dessen erste, hintere Übergangsstufe einen kreissegmentartigen Querschnitt und dessen zweite, vordere Übergangsstufe einen kreissegmentartigen Querschnitt aufweist, wobei der Krümmungsradius der zweiten Übergangsstufe größer als der Krümmungsradius der erste Übergangsstufe ist, wobei der Krümmungsradius der ersten Übergangsstufe insbesondere 0,2 mm und der Krümmungsradius der zweiten Übergangsstufe insbesondere 0,25 mm beträgt. Bevorzugt beträgt die Gesamtlänge der Verankerungsstrukturen mit dem sich konisch verjüngenden Strukturabschnitt und dem Übergangsabschnitt wenigstens 2 mm und/oder maximal 2,3 mm, wobei die Verankerungsstrukturen bevorzugt eine Gesamtlänge von 2,1 mm aufweisen. Dabei kann sich der vordere Schaftabschnitt, an welchem die Verankerungsstrukturen ausgebildet sind, unmittelbar an die Spitze anschließen. Alternativ kann dazwischen ein vorderer axialer Endabschnitt mit einem konstanten Durchmesser, welcher dem Schaftdurchmesser des sich an den Übergangsbereich anschließenden hinteren Schaftabschnitts entspricht, vorgesehen sein. Die axiale Länge dieses vorderen Endabschnitts liegt insbesondere zwischen 0,5 und 1,5 mm und beträgt vorzugsweise 1 mm.

Gemäß einer Variante der vorliegenden Erfindung ist an dem hinteren Ende des Schaftes ein gegenüber dem Schaft verbreitert ausgebildeter Kopf vorgesehen ist, wobei zwischen dem Schaft und dem Kopf ein sich zum Kopf aufweitender Übergangsbereich vorgesehen ist, und wobei der Kopf einen sich an den Übergangsbereich anschließenden, sich zum hinteren Ende des Befestigungselementes aufweitend ausgebildeten Kopfabschnitt aufweist, wobei der Aufweitungswinkel des Kopfabschnitts ≥ 110° ist. Derartige Nägel eignen sich insbesondere dazu, Dämmstoffe, wie beispielsweise solche in Form von Dämmplatten, an einer Holzkonstruktion zu befestigen. Dank des Übergangsbereiches und des sich an diesen anschließenden, sich zum hinteren Ende des Befestigungselementes mit einem Aufweitungswinkel ≥ 110° aufweitenden Kopfabschnittes wird eine hervorragende Durchzugsfestigkeit des Befestigungselementes erzielt, wodurch ein sicherer Halt des Dämmstoffes am Befestigungselement gewährleistet ist.

Der Schaft, die Spitze, der Übergangsbereich und der Kopf definieren bevorzugt gemeinsam eine Befestigungselementvorderseite sowie eine Befestigungselementrückseite, die sich parallel oder im Wesentlichen parallel zueinander erstrecken, wobei der Schaft und/oder die Spitze und/oder der Übergangsbereich und/oder der Kopf insbesondere einen rechteckigen oder quadratischen Querschnitt aufweist/aufweisen. Entsprechend lässt sich das Befestigungselement bei seiner Herstellung einfach aus einer Schichtholzplatte ausschneiden, was zu geringen Produktionskosten führt.

Der Aufweitungswinkel des Übergangsbereichs liegt bevorzugt im Bereich von 20°-90°, insbesondere im Bereich von 40°-60°. Mit einem Aufweitungswinkel in diesem Bereich wurden besonders gute Ausziehfestigkeiten erzielt. Vorteilhaft weist der Übergangsbereich in Längsrichtung des Schaftes eine Länge von wenigstens 4mm aufweist, was der Ausziehfestigkeit ebenfalls zuträglich ist.

Gemäß einer Ausgestaltung der vorliegenden Erfindung weist der Kopf einen am hinteren Ende des Befestigungselementes benachbart zum sich aufweitend ausgebildeten Kopfabschnitt angeordneten weiteren Kopfabschnitt auf, der sich parallel oder im Wesentlichen parallel zueinander erstreckende Längsseiten umfasst. Dies ist der Festigkeit des Befestigungselementes beim Einschießen zuträglich.

Bevorzugt steht der Kopf insbesondere beidseitig mindestens 3mm über den Schaft vor, bevorzugt mindestens 5 mm. Auf diese Weise kann das Befestigungselement insbesondere Dämmstoffplatten sehr gut fixieren.

Der Spitzenwinkel der Spitze ist bevorzugt kleiner als 90°, liegt insbesondere im Bereich von 70°-10° und beträgt vorteilhaft 30°. Dank einer derart ausgebildeten Spitze werden die Kräfte verringert, die für das Eintreiben des Befestigungselementes in einen Untergrund erforderlich sind.

Der Durchmesser beziehungsweise die kleinste Schaftdicke beträgt gemäß einer Ausgestaltung der vorliegenden Erfindung 2 mm bis 6 mm, insbesondere 3 mm bis 6 mm und bevorzugt 4 mm bis 5 mm.

Der Schaft kann über seine gesamte Länge einen konstanten Querschnitt aufweisen.

Der Schaft ist gemäß einer Ausgestaltung der vorliegenden Erfindung mit zumindest einer Nut versehen. Beispielsweise kann eine Vielzahl von Nuten vorgesehen sein, die sich parallel zueinander in einer Richtung quer, insbesondere senkrecht zur Längsachse erstrecken. Auch können eine oder mehrere, sich schraubenlinienförmig entlang des Schaftes erstreckende Nuten vorgesehen sein. Ebenso sind sich in Richtung der Längsachse erstreckende Nuten denkbar. Derartige Nuten können insbesondere die Auszugsfestigkeit eines in ein Werkstück eingetriebenen Nagels positiv beeinflussen.

Gemäß einer Ausgestaltung der vorliegenden Erfindung kann das Befestigungselement zumindest in einem zum Eintreiben in ein Werkstück vorgesehenen Bereich mit einer Beschichtung beschichtet sein, insbesondere mit einer bio-basierten und biologisch abbaubaren polymeren Beschichtung, bevorzugt ohne den Einsatz zusätzlicher Hilfsmittel in Form von Beschleunigern, Flusssteuerungsmitteln, Dispersionsmitteln, oberflächenaktiven Mitteln oder dergleichen. Die Erfinder haben erkannt, dass polymere Beschichtungen in Abhängigkeit von der Geschwindigkeit, mit der das Befestigungselement in ein Werkstück eingetrieben wird, durch die entstehende Reibung thermisch dahingehend aktiviert werden, dass sie insbesondere zu Holz eine hohe Klebkraft entfalten. Entsprechend werden Befestigungselement und Werkstück zusätzlich verklebt, wodurch die Ausziehwerte deutlich verbessert werden. Dank des Einsatzes einer bio-basierten und biologisch abbaubaren polymeren Beschichtung sind die Herstellung des erfindungsgemäßen Befestigungselementes ebenso wie die Entsorgung zum Beispiel im Rahmen einer industriellen Kompostierung umweltfreundlich.

Gemäß einer Ausgestaltung der vorliegenden Erfindung ist das Polymer ein bio-basierter Polyester.

Die Beschichtung weist vorteilhaft Polymilchsäure (PLA) und/oder Polyhydroxyalkanoat (PHA) und/oder Polyhydroxybutyrat (PHB) und/oder Polyhydroxybutyrat-co-Valerat (PHBV) und/oder Polyhydroxysuccinat (PBS) und/oder thermoplastische Stärke auf oder besteht aus einem dieser Materialien oder aus einem Gemisch dieser Materialien. So kann es sich bei der Beschichtung um ein Gemisch aus einem Polylactid und thermoplastische Stärke, um ein Gemisch aus einem Polylactid und Polyhydroxyalkanoate (PHA), ein Gemisch aus einem Polylactid und Polyhydroxybutyrat (PHB), ein Gemisch aus einem Polylactid und Polybutylensuccinat (PBS), ein Gemisch aus einem Polylactid und Polyhydroxybutyrat co-Valeriat (PHBV), ein Gemisch von mindestens zwei Biopolymeren aus der Gruppe der bio-basierten und biologisch abbaubaren Polyester PLA, PHA, PHB, PHBV, PBS mit oder ohne thermoplastischer Stärke oder ein Gemisch aus mindestens drei Biopolymeren aus der Gruppe der bio-basierten und biologisch abbaubaren Polyester PLA, PHA, PHB, PHBV, PBS mit oder ohne thermoplastischer Stärke handeln, um nur einige Beispiele zu nennen.

Die Polymere werden bevorzugt lösemittelfrei in Pulverform zur Beschichtung eingesetzt, wobei die Pulverpartikel insbesondere eine Körnung kleiner 500 µm und besonders bevorzugt eine Körnung kleiner 250 µm aufweisen.

Zum Verbinden zumindest zweier Werkstücke unter Verwendung eines mit einer Beschichtung versehenen Befestigungselements wird das Befestigungselement vorteilhaft mittels eines Setzgerätes mit einer Mindestgeschwindigkeit von 20 m/s in die Werkstücke eingetrieben wird, um die Oberfläche der Beschichtung thermisch zu aktivieren.

Ferner schafft die vorliegende Erfindung einen Befestigungselementstreifen zur Verwendung in einem Nagelsetzgerät, wobei der Befestigungselementstreifen eine Vielzahl von erfindungsgemäßen Befestigungselementen aufweist.

Weitere Merkmale und Vorteile der vorliegenden Erfindung werden anhand der nachfolgenden Beschreibung unter Bezugnahme auf die beiliegende Zeichnung deutlich. Darin ist
- Figur 1: eine Seitenansicht eines Befestigungselementes gemäß einer Ausführungsform der vorliegenden Erfindung;
- Figur 2: eine Seitenansicht eines Befestigungselementstreifens, der eine Vielzahl der in Figur 1 dargestellten Befestigungselemente aufweist;
- Figur 3: eine perspektivische Ansicht eines Befestigungselementes gemäß einer zweiten Ausführungsform der vorliegenden Erfindung;
- Figur 4: eine Seitenansicht des in Figur 3 gezeigten Befestigungselementes;
- Figur 5: eine Seitenansicht eines Befestigungselementes gemäß einer dritten Ausführungsform der vorliegenden Erfindung;
- Figur 6: eine vergrößerte Ansicht des Ausschnitts VI in Figur 5;
- Figur 7: eine Seitenansicht eines Befestigungselementes gemäß einer vierten Ausführungsform der vorliegenden Erfindung;
- Figur 8: eine perspektivische Teilansicht eines Befestigungselementstreifens, der eine Vielzahl der in Figur 7 dargestellten Befestigungselemente aufweist;
- Figur 9: eine Seitenansicht eines Befestigungselementes gemäß einer fünften Ausführungsform der vorliegenden Erfindung, und
- Figur 10: eine Seitenansicht eines Befestigungselementes gemäß einer sechsten Ausführungsform der vorliegenden Erfindung.

Gleiche Bezugsziffern bezeichnen nachfolgend gleiche oder gleichartige Bauteile oder Bauteilbereiche.

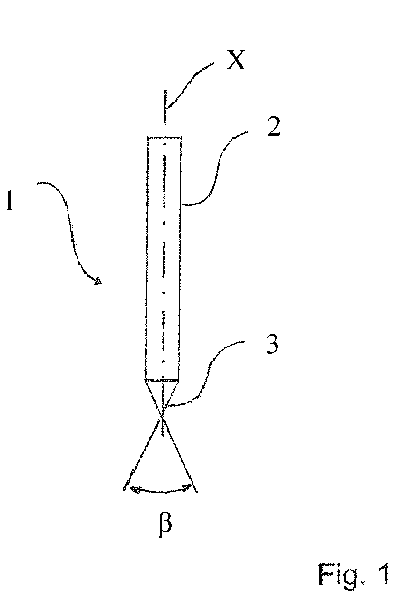

In Figur 1 ist schematisch ein Befestigungselement 1 gemäß einer Ausführungsform der vorliegenden Erfindung in Form eines Nagels dargestellt. Das Befestigungselement 1 ist einteilig ganz oder zumindest zum Großteil aus Vulkanfiber hergestellt. Er umfasst einen eine Längsachse X definierenden Schaft 2 mit vorliegend kreisrundem Querschnitt, an dessen unterem Ende eine Spitze 3 vorgesehen ist, die als kegelförmige Rundspitze ausgebildet ist. Der Spitzenwinkel βder Spitze ist bevorzugt ≥ 36° und besser noch ≥ 40°, liegt insbesondere im Bereich von 45° und 60° und beträgt bei der dargestellten Ausführungsform 55°. An dem oberen Endbereich ist der Schaft 2 senkrecht zur Längsachse X abgeschnitten. Alternativ kann am oberen Ende auch ein Kopf vorgesehen sein, der dann bevorzugt als halblinsenförmige Kalotte ausgeführt ist, die quer zu Längsachse X seitlich über den Schaft 2 vorstehen kann. Das in Figur 1 dargestellte Befestigungselement 1 kann aus einem Vollmaterial, insbesondere einem Stangenmaterial, durch Drehen oder Drechseln hergestellt werden.

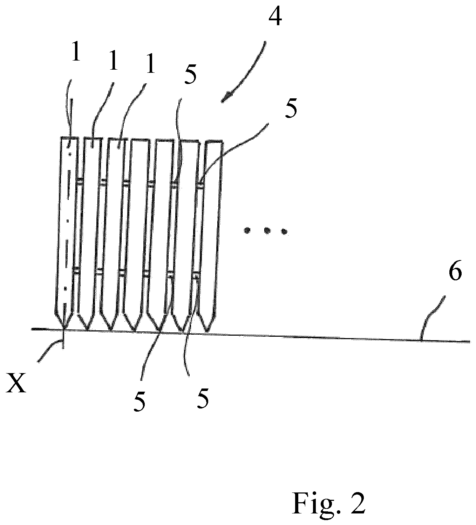

Figur 2 zeigt einen Befestigungselementstreifen 4 gemäß einer Ausführungsform der vorliegenden Erfindung. Dieser besteht aus einer Vielzahl von parallel angeordneten Befestigungselementen 1 gemäß Figur 1, welche miteinander durch Verbindungsmittel 5 miteinander verbunden sind, hier in der Form von Verbindungsstegen. Die Verbindungsstege sind so ausgestaltet, dass sie beim Herausschießen eines Befestigungselementes 1 aus einem Befestigungselementsetzgerät automatisch durchtrennt werden. In der dargestellten Ausführungsform liegen die Spitzen 3 der parallel angeordneten Befestigungselemente 1 auf einer Geraden 6, die vorliegend rechtwinklig zu den Längsachsen X ausgerichtet ist. Alternativ kann die Gerade 6 aber auch einen Winkel mit den Längsachsen X einschließen, der ungleich 90° ist.

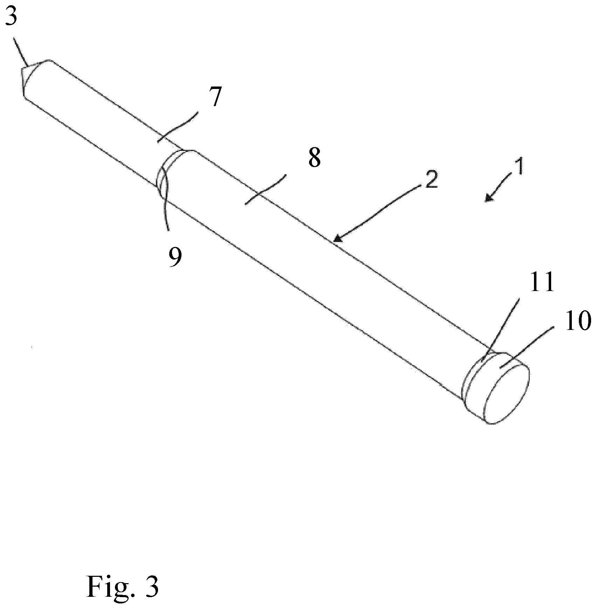

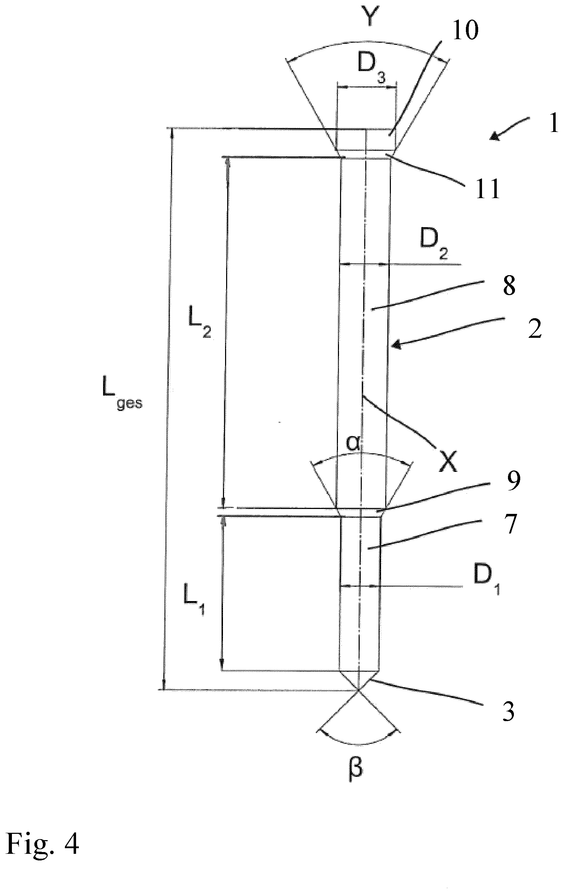

Die Figuren 3 und 4 zeigen eine Ausführungsform eines erfindungsgemäßen Befestigungselementes 1, bei dem es sich ebenfalls um einen einteiligen Nagel handelt. Das Befestigungselement 1 ist ganz oder zumindest zum Großteil aus Vulkanfiber hergestellt. Es umfasst einen Schaft 2, der eine Längsachse X definiert und in einen vorderen Schaftabschnitt 7 und in einen hinteren Schaftabschnitt 8 unterteilt ist, die über einen Übergangsabschnitt 9 miteinander verbunden sind, eine am vorderen Ende des vorderen Schaftabschnitts 7 angeordnete Spitze 3 und einen am hinteren Ende des hinteren Schaftabschnitts 8 angeordneten, gegenüber diesem verbreitert ausgebildeten Kopf 10, wobei sich zwischen dem hinteren Schaftabschnitt 8 und dem Kopf 10 ein sich zum Kopf 10 aufweitender Übergangsbereich 11 erstreckt. Der Schaft 2, die Spitze 3, der Kopf 10 und der Übergangsbereich 11 weisen jeweils einen kreisrunden Querschnitt auf. Der vordere Schaftabschnitt 7 weist einen ersten Durchmesser D₁ und der hintere Schaftabschnitt 8 einen zweiten Durchmesser D₂ auf, wobei der zweite Durchmesser D₂ größer als der erste Durchmesser D₁ ist. Der zweite Durchmesser D₂ entspricht bevorzugt dem 1,3- bis 1,5-fachen des ersten Durchmessers D₁, wobei der erste Durchmesser D₁ insbesondere im Bereich von 2,4 bis 3,2 mm und der zweite Durchmesser D₂ im Bereich von 3,1 bis 3,9 mm liegt. Vorliegend beträgt der erste Durchmesser D₁ 2,8 mm und der zweite Durchmesser D₂ 3,5 mm. Die Länge L₁ des vorderen Schaftabschnitts 7 ist geringer als die Länge L₂ des hinteren Schaftabschnitts 8. Insbesondere entspricht die Länge L₁ des vorderen Schaftabschnitts 7 zwischen 25% und 40% der Gesamtlänge L_{ges} des Befestigungselementes 1 und die Länge L₂ des hinteren Schaftabschnitts 8 zwischen 55% und 70% der Gesamtlänge L_{ges} des Befestigungselementes 1, wobei die Gesamtlänge L_{ges} bevorzugt zwischen 30 und 60 mm liegt und vorliegend 40mm beträgt. Der Übergangsabschnitt 9, in dem der erste Durchmesser D₁ konisch in den zweiten Durchmesser D₂ übergeht, ist kegelstumpfförmig ausgebildet, wobei der Öffnungswinkel α des Übergangsabschnitts 9 bevorzugt im Bereich zwischen 55 und 65° liegt und vorliegend 60° ± 3° beträgt. Die Spitze 3 ist kegelförmig ausgebildet und besitzt einen Spitzenwinkel β, der im Bereich von 60° und 120° liegt und in dem dargestellten Ausführungsbeispiel 90° ± 3° beträgt. Alternativ könnte auch eine ballistisch ausgebildete Spitze 3 vorgesehen sein, deren Spitzenwinkel β zwischen dem vorderen Ende der Spitze 3 und dem hinteren Ende der Spitze 3 am Übergang zum Schaft 2 gemessen wird. Die Spitze 3 ist hierbei bevorzugt spitz zulaufend ausgebildet, kann aber auch abgerundet sein.

Der grundsätzlich optionale Kopf 10 ist vorliegend zylindrisch ausgebildet und besitzt in Richtung der Längsachse X eine Länge von insbesondere 0,8 bis 2,5 mm, hier von 1,5 mm. Der Kopf 10 hat einen kreisrunden Querschnitt mit einem dritten Durchmesser D₃, der bevorzugt dem 1,1 bis 1,3-fachen des zweiten Durchmessers D₂ entspricht, insbesondere dem 1,2-fachen, und vorliegend 4,2 mm beträgt. Der Übergangsbereich 11 zwischen dem hinteren Schaftabschnitt 8 und dem Kopf 10 ist vorliegend kegelstumpfförmig ausgebildet und erweitert sich vom hinteren Schaftabschnitt 8 zum Kopf 10 hin. Die Außenfläche des Übergangsbereiches 11 beginnt unmittelbar an der vorderen äußeren Umfangskante des Kopfes 10 und geht stetig in den Schaft 2 über. Der Öffnungswinkel γ des Übergangsbereiches 11 liegt bevorzugt im Bereich zwischen 55 und 65° und beträgt vorliegend 60° ± 3°.

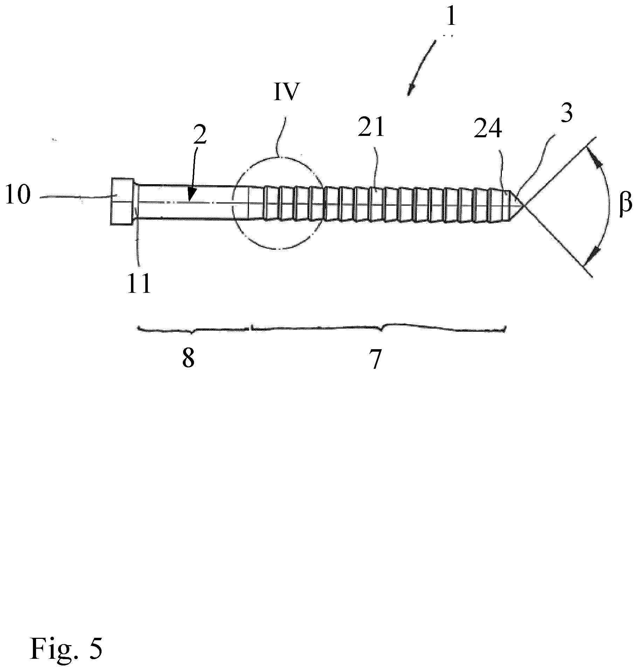

Figur 5 zeigt eine weitere Ausführungsform eines erfindungsgemäßen Befestigungselementes 1 in Form eines Nagels, der sich besonders dazu eignet, Fassadenbretter an einer Unterkonstruktion zu befestigen, beispielsweise an einer Holzkonstruktion. Das Befestigungselement 1 besteht überwiegend oder vollständig aus Vulkanfiber. Es umfasst einen Schaft 2, der eine Längsachse X definiert, eine am vorderen Ende des Schaftes 2 angeordnete Spitze 3 und einen am hinteren Ende des Schaftes 2 angeordneten, gegenüber diesem verbreitert ausgebildeten Kopf 10, wobei sich zwischen dem Schaft 2 und dem Kopf 4 ein sich zum Schaft 2 aufweitender Übergangsbereich 11 erstreckt. Der Schaft 2, die Spitze 3, der Kopf 10 und der Übergangsbereich 11 weisen jeweils einen kreisrunden Querschnitt auf. Die Spitze 3 ist kegelförmig ausgebildet und besitzt einen Spitzenwinkel β, der im Bereich von 60° und 120° liegt und in dem dargestellten Ausführungsbeispiel 90° ± 3° beträgt. Alternativ könnte auch eine ballistische ausgebildete Spitze 3 vorgesehen sein, deren Spitzenwinkel gemessen zwischen dem vorderen Ende der Spitze 3 und dem hinteren Ende der Spitze 3 am Übergang zum Schaft 2 gemessen wird. Die Spitze 3 ist hierbei bevorzugt spitz zulaufend ausgebildet, kann aber auch abgerundet sein. Der Kopf 10 ist zylindrisch ausgebildet und besitzt in Richtung der Längsachse X eine Länge von 1,5 bis 4,5 mm, hier von 3 mm. Der Außendurchmesser des Kopfes 10 liegt im Bereich von 5,0 bis 7,0 mm und beträgt in dem dargestellten Ausführungsbeispiel 6,3 mm. Wesentlich ist, dass der Durchmesser des Kopfes 4 um 25 bis 40%, insbesondere 34 ± 1% größer ist als der Durchmesser des zum Übergangsbereich 11 benachbarten axial hinteren Endabschnitts des Schafts 2. Dieser liegt im Bereich zwischen 3,5 mm und 5,5, mm und beträgt in dem dargestellten Ausführungsbeispiel 4,7 mm. Der Übergangsbereich 11 zwischen dem Schaft 2 und dem Kopf 4 erweitert sich vom Schaft 2 zum Kopf 4 hin. Dabei ist die ringförmige Außenfläche des Übergangsbereichs 11 zur Längsachse X hin, d.h. konkav gekrümmt ausgebildet, und besitzt die Außenfläche im Querschnitt, d.h. jeweils im Längsschnitt durch das Befestigungselement 1, eine kreisbogenabschnittförmige Kontur, die sich über einen Umfangswinkel von 90° erstreckt. Die Außenfläche beginnt unmittelbar an der vorderen äußeren Umfangskante des Kopfes 10 und geht stetig in den Schaft 2 über. Dabei besitzt die kreisbogenabschnittförmige Kontur einen Rundungsradius R, welcher ≥ 0,3 mm, bevorzugt ≥ 0,6 mm ist und in dem dargestellten Ausführungsbeispiel 0,8 mm beträgt. Das Befestigungselement 1 besitzt eine Gesamtlänge im Bereich von 50 mm und 90 mm, wobei die Gesamtlänge im dargestellten Ausführungsbeispiel 58 mm beträgt.

Der sich an den Übergangsbereich 11 anschließende hintere Schaftabschnitt 8 des Schaftes 2 ist glatt mit einem konstanten Durchmesser von hier 4,7 mm ausgebildet. Dieser axial hintere Schaftabschnitt 8 erstreckt sich über eine Strecke von 15 mm. Der sich an diesen axial hinteren Schaftabschnitt 8 in Richtung der Nagelspitze 3 anschließende vordere Schaftabschnitt 7 weist keine glatte Außenfläche auf. Vielmehr sind an diesem axialen Schaftabschnitt 7 Verankerungsstrukturen 21 ausgebildet, die jeweils einen sich zur Spitze 3 konisch verjüngenden Strukturabschnitt 22 aufweisen und einen sich rückseitig daran anschließenden Übergangsabschnitt 23. Insgesamt sind an dem vorderen Schaftabschnitt 7 eine Vielzahl solcher Verankerungsstrukturen 21 vorgesehen, die jeweils in gleicher Weise ausgebildet sind.

Im Einzelnen weisen die Verankerungsstrukturen 21 einen maximalen Strukturdurchmesser D₁ auf, der größer als der Schaftdurchmesser D_{S} des hinteren Schaftabschnitts 8 des Schaftes 2 ist, der sich an den Übergangsbereich 11 anschließt. Dabei sollte der maximale Strukturdurchmesser D₁ wenigstens 1,5 % und/oder um maximal 3 % größer sein als der Schaftdurchmesser des hinteren Schaftabschnitts 8 des Schaftes 2. In dem dargestellten Ausführungsbeispiel beträgt der maximale Strukturdurchmesser D₁ 4,8 mm und liegt jeweils am zum Kopf 10 weisenden hinteren Ende der sich konisch verjüngenden Strukturabschnitte 22. Mit anderen Worten ist der maximale Strukturdurchmesser D₁ um 2,1% größer als der Schaftdurchmesser D_{S} des hinteren Schaftabschnitts 8 des Schaftes 2.

Die Verankerungsstrukturen 21 besitzen an den vorderen Enden der sich konisch verjüngenden Strukturabschnitte 22 einen minimalen Strukturdurchmesser D₂, der kleiner als der Schaftdurchmesser D_{S} an des hinteren Schaftabschnitts 8 des Schaftes 2 ist, der sich an den Übergangsbereich 11 anschließt. Dabei sollte der minimale Strukturdurchmesser D₂ um wenigstens 8% und/oder maximal 12% kleiner als der Schaftdurchmesser D_{S} des hinteren Schaftabschnitts 8 des Schafts 2 sein. In dem dargestellten Ausführungsbeispiel beträgt der minimale Schaftdurchmesser D₂ 4.3 mm, so dass er um 8,5 % kleiner als der Schaftdurchmesser D_{S} ist.

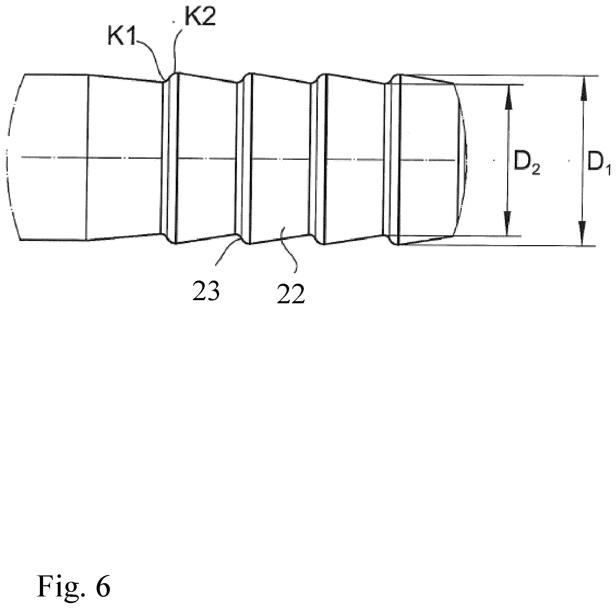

Die an den zum Kopf 10 weisenden Rückseiten der sich konisch verjüngenden Strukturabschnitte 22 liegenden Übergangsabschnitte 23 sind zweistufig ausgebildet, wie es in Figur 6 gezeigt ist, wobei die Übergangsstufen jeweils einen kreissegmentartigen Querschnitt aufweisen. Dabei ist der Krümmungsradius K1 der zweiten Übergangsstufe größer als der Krümmungsradius K1 der ersten Übergangsstufe ist. In dem dargestellten Ausführungsbeispiel beträgt der Krümmungsradius K1 der ersten Übergangsstufe 0,2 mm und der Krümmungsradius K2 der zweiten Übergangsstufe 0,25 mm.

Zwischen dem vorderen Schaftabschnitt 7, an welchem die Verankerungsstrukturen 21 ausgebildet sind, und der Spitze 3 liegt ein weiterer vorderer Endabschnitt 24 mit einem konstanten Außendurchmesser, welcher dem Schaftdurchmesser des sich an den Übergangsbereich 11 anschließenden hinteren Schaftabschnitts 8 entspricht und eine axiale Länge von 0,5 bis 1,5 mm, hier 1 mm besitzt.

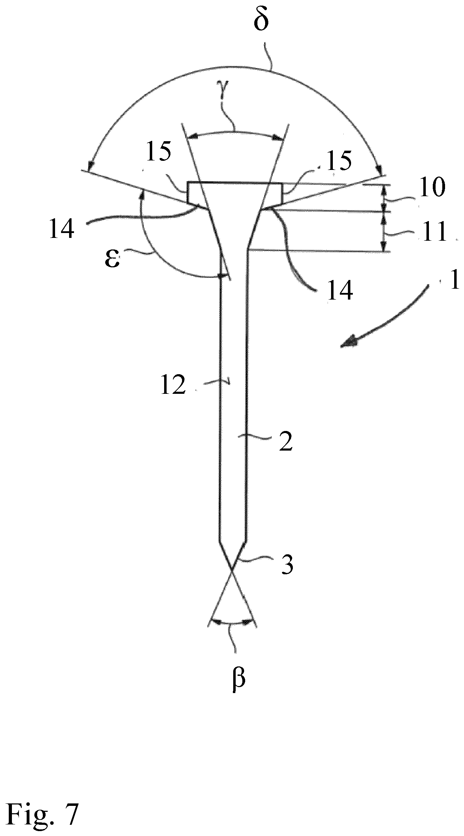

Figur 7 zeigt ein Befestigungselement 1 gemäß einer weiteren Ausführungsform der vorliegenden Erfindung, bei dem es sich um einen einteiligen Nagel handelt. Das Befestigungselement 1 ist zumindest zum Großteil oder vollständig aus Vulkanfiber hergestellt. Es umfasst einen Schaft 2, eine am vorderen Ende des Schaftes 2 angeordnete Spitze 3 und einen am hinteren Ende des Schaftes 2 angeordneten, gegenüber diesem verbreitert ausgebildeten Kopf 10, wobei sich zwischen dem Schaft 2 und dem Kopf 10 ein sich zum Kopf 10 aufweitender Übergangsbereich 11 erstreckt. Der Schaft 2, die Spitze 3, der Kopf 10 und der Übergangsbereich 11 weisen jeweils einen rechteckigen Querschnitt auf und bilden gemeinsam eine Befestigungselementvorderseite 12 sowie eine Befestigungselementrückseite 13, die sich parallel oder im Wesentlichen parallel zueinander erstrecken. Der Ausdruck " im Wesentlichen parallel" soll im Rahmen der vorliegenden Anmeldung Abweichungen von der Parallelität im Bereich von ± 2° abdecken. Der Schaft 2 hat über seine gesamte Länge einen konstanten Querschnitt. Die Spitze 3 hat in der Vorderansicht des Befestigungselementes 1 gemäß Figur 5 einen Spitzenwinkel βvon bevorzugt weniger als 90°, der vorliegend 30° beträgt. Der Kopf 10 steht beidseitig von dem Schaft 2 vor, insbesondere jeweils um ein Maß von mindestens 3 mm, vorliegend um jeweils 7 mm, und umfasst einen sich an den Übergangsbereich 11 anschließenden, sich zum hinteren Ende des Befestigungselementes 1 aufweitend ausgebildeten Kopfabschnitt 14, dessen Aufweitungswinkel δ bevorzugt ≥110° ist und vorliegend 150° beträgt. Der Kopf 10 umfasst ferner einen am hinteren Ende des Befestigungselementes 1 und benachbart zum sich aufweitend ausgebildeten Kopfabschnitt 14 angeordneten weiteren Kopfabschnitt 15, der sich parallel oder im Wesentlichen parallel zueinander erstreckende Stirnseiten umfasst. Der Aufweitungswinkel γ des Übergangsbereiches 11 liegt im Bereich von 20° bis 90° und beträgt vorliegend 35°. Ein Winkel ε zwischen dem Übergangsbereich 11 und dem Kopfabschnitt 14 liegt bevorzugt zwischen 110° und 160 ° und beträgt vorliegend 127°. Die Gesamtlänge des Befestigungselementes 1 liegt bevorzugt im Bereich von 70 mm bis 230 mm und beträgt vorliegend 70 mm, wobei die Teillänge des Übergangsbereiches 11 bevorzugt wenigstens 4 mm beträgt, vorliegend 8 mm.

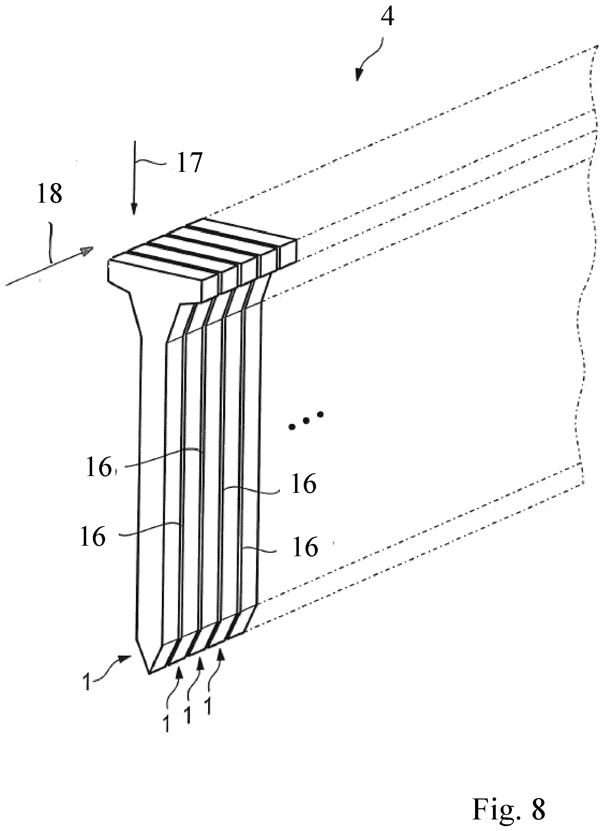

Figur 8 zeigt einen Befestigungselementstreifen 4, der eine Vielzahl der in Figur 7 gezeigten Befestigungselemente 1 aufweist, die parallel oder im Wesentlichen parallel zueinander angeordnet sind, wobei jedes Befestigungselement 1, abgesehen von dem ersten und dem letzten Befestigungselement 1, vorder- und rückseitig mit einem weiteren Befestigungselement 1 verklebt ist, vorliegend jeweils über eine zwischen zwei Befestigungselementen 1 angeordnete Trennschicht 16. Die Trennschichten 16 sind vorliegend aus einem Material mit geringer Scherfestigkeit hergestellt. Sie bilden somit gewollte Schwachstellen, entlang derer sich benachbart angeordnete Befestigungselemente 1 voneinander trennen lassen, insbesondere indem durch ein Befestigungselementsetzgerät, in das der Befestigungselementstreifen 4 eingesetzt ist, von oben auf den Kopf 10 des vordersten Befestigungselementes 1 des Befestigungselementstreifens 4 eine Kraft in Richtung des Pfeils 17 ausgeübt wird.

Zur Herstellung des Befestigungselementstreifen 4 werden in einem ersten Schritt eine Vielzahl von Vulkanfiberplatten oder -schichten derart gestapelt und miteinander verklebt, dass die Höhe des Stapels in der durch den Pfeil 18 angezeigten Stapelrichtung zumindest der Gesamtlänge des Befestigungselementstreifens 4 in Richtung des Pfeils 18 entspricht, wobei zwischen denjenigen Schichten, welche die eigentlichen Befestigungselemente 1 bilden, in gleichmäßigen Abständen die Trennschichten 16 angeordnet und mit den benachbarten Schichten verklebt werden. In einem weiteren Schritt wird eine Vielzahl von Befestigungselementstreifen 4 aus dem im ersten Schritt erzeugten Stapel ausgeschnitten, insbesondere unter Verwendung eines Lasers, dessen Laserstrahl quer, insbesondere senkrecht zu den Schichtebenen ausgerichtet ist. Alternativ können die Befestigungselementstreifen 4 aber auch mittels Fräsen, Sägen, Wasserstrahlschneiden oder dergleichen ausgeschnitten werden.

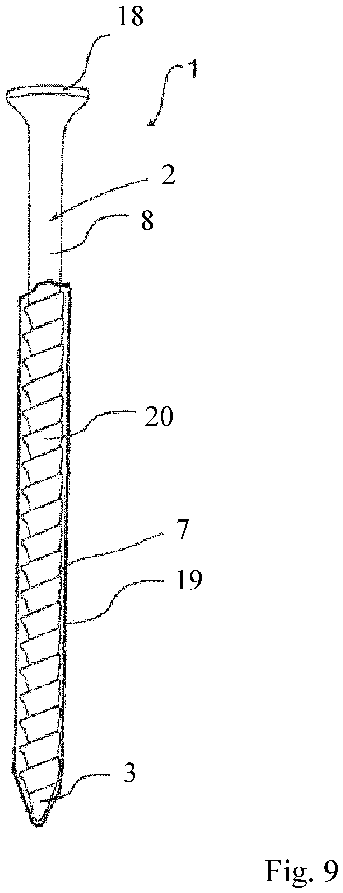

Figur 9 zeigt ein Befestigungselement 1 gemäß noch einer weiteren Ausführungsform der vorliegenden Erfindung, das zumindest zum Großteil oder vollständig aus Vulkanfiber hergestellt und teilweise mit einer bio-basierten und biologisch abbaubaren polymeren Beschichtung 19 aus vorliegend PLA versehen ist. Bei dem Befestigungselement 1 handelt es sich vorliegend um einen Schraubnagel, der einen Kopf 10, einen sich an den Kopf 10 anschließenden Schaft 2 mit einem glatten hinteren Schaftabschnitt 8 und einem mit einem Gewinde 20 versehenen vorderen Schaftabschnitt 7 und eine am freien Ende des vorderen Schaftabschnitts 7 angeordnete Spitze 3 aufweist, wobei das Gewinde 20 und die Spitze 3 mit der Beschichtung 19 beschichtet sind, welche die gewindeartigen Vertiefungen des Gewindes 20 vollständig ausfüllt.

Alternativ kann der Schraubnagel abweichend ausgeführt sein. Ebenso kann es sich bei dem Befestigungselement 1 auch um einen Nagel, eine Schraube, eine Klammer oder dergleichen handeln.

Die Beschichtung 19 dient zur Erhöhung der Auszugsfestigkeit des Befestigungselementes 1 in einem Zustand, in dem dieses in ein Werkstück eingetrieben ist. Die Erhöhung der Auszugsfestigkeit wird durch ein durch Reibung verursachtes thermisches Aktivieren der Beschichtung 19 während des Eintreibvorganges bewirkt, wodurch das Befestigungselement 1 zusätzlich mit dem Werkstück verklebt wird. Das Befestigungselement 1 wird mit solchen Setzmitteln, z.B. Druckluft-, Gas- oder Elektronagler appliziert, die eine ausreichend hohe Geschwindigkeit beim Setzen erzielen, die genügend Reibungswärme erzeugt, um die Oberfläche der Beschichtung 19 anzuschmelzen oder zumindest zu erweichen. Als ausreichend hohe Geschwindigkeiten gelten Geschwindigkeiten oberhalb von 20 m/s. Bei diesen Geschwindigkeiten erreicht die Grenzschicht zwischen der Oberfläche des Befestigungselementes 1 und der Matrix, z.B. Nadelholz, Temperaturen von größer 120 °C. Oberflächentemperaturen von 200 °C können mit Eintreibgeschwindigkeiten ab 25 m/s erreicht werden.

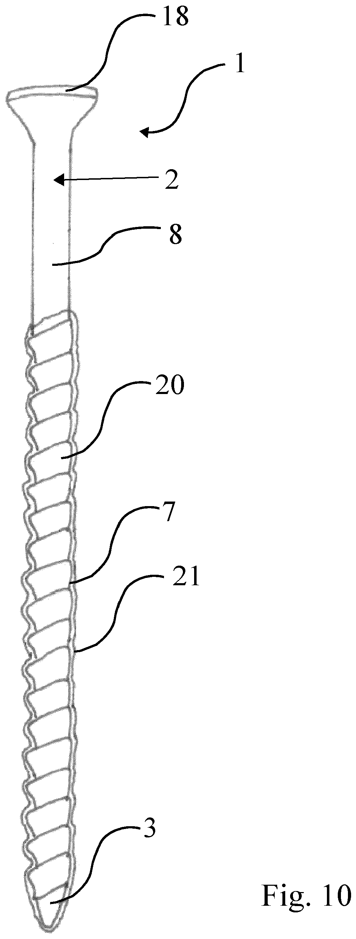

Figur 10 zeigt ein Befestigungselement 1 gemäß einer sechsten Ausführungsform der vorliegenden Erfindung, bei dem es sich um einen Schraubnagel handelt. Das Befestigungselement 1 ist vorliegend zumindest zum Großteil aus lignocellulosischem Material hergestellt und im Schaftbereich teilweise oder alternativ auch vollständig mit einer Vulkanfiber aufweisenden Außenbeschichtung 21 versehen. Es umfasst einen Kopf 10, einen sich an den Kopf 10 anschließenden Schaft 2 mit einem glatten hinteren Schaftabschnitt 8 und einem mit einem Gewinde 20 versehenen vorderen Schaftabschnitt 7 und eine am freien Ende des vorderen Schaftabschnitts 7 angeordnete Spitze 3, wobei das Gewinde 20 und die Spitze 3 mit der Außenbeschichtung 21 beschichtet sind.

Alternativ kann der Schraubnagel abweichend ausgeführt sein. Ebenso kann es sich bei dem Befestigungselement 1 auch um einen Nagel, eine Schraube, eine Klammer oder dergleichen handeln.

Die Außenbeschichtung 21 weist vorliegend ein Bindematerial auf, insbesondere in Form eines Lacks, eines Leims oder eines Klebstoffs, bevorzugt eines Nitrozellulose-Klebstoffs, in dem Vulkanfiberpartikel dispergiert sind. Sie dient analog zur Beschichtung 19 der zuvor beschriebenen Ausführungsform zur Erhöhung der Auszugsfestigkeit des Befestigungselementes 1 in einem Zustand, in dem dieses insbesondere in ein feuchtes Holzwerkstück eingetrieben ist. Die Erhöhung der Auszugsfestigkeit wird dadurch erzielt, dass die Vulkanfiberpartikel mit zunehmender Feuchte, die sie von dem feuchten Werkstück aufnehmen, aufquellen.

Es sollte klar sein, dass die zuvor beschriebenen Ausführungsformen nur als Beispiel dienen und nicht als einschränkend zu verstehen sind. Vielmehr können Änderungen und/oder Modifikationen vorgenommen werden, ohne den durch die beiliegenden Ansprüche definierten Schutzbereich zu verlassen. So kann die Spitze 3 grundsätzlich auch als ballistisch geformte Spitze ausgebildet sein. Ebenso können an dem Schaft 2 ein oder mehrere Nuten ausgebildet sein. Beispielsweise kann eine Vielzahl von Nuten vorgesehen sein, die sich parallel zueinander in einer Richtung quer, insbesondere senkrecht zur Längsachse X erstrecken. Auch können eine oder mehrere, sich schraubenlinienförmig entlang des Schaftes 2 erstreckende Nuten vorgesehen sein. Ebenso sind sich in Richtung der Längsachse X erstreckende Nuten denkbar. Derartige Nuten können insbesondere die Auszugsfestigkeit eines in ein Werkstück eingetriebenen Nagels positiv beeinflussen.

## Patentansprüche

1. Befestigungselement (1), insbesondere in Form eines Nagels, einer Schraube, eines Schraubnagels oder einer Klammer, **dadurch gekennzeichnet, dass** das Befestigungselement (1) Vulkanfiber aufweist oder aus Vulkanfiber besteht.

2. Befestigungselement (1) nach Anspruch 1, **dadurch gekennzeichnet, dass** ein Bereich des Befestigungselementes, der zum Eintreiben oder Einschrauben in ein Werkstück bestimmt ist, mit einer Vulkanfiber aufweisenden Außenbeschichtung (21) versehen ist, wobei
die Außenbeschichtung (21) insbesondere ein Bindematerial aufweist, insbesondere in Form eines Lacks, eines Leims oder eines Klebstoffs, bevorzugt eines Nitrozellulose-Klebstoffs, in dem Vulkanfiberpartikel dispergiert sind.

3. Befestigungselement (1) nach einem der vorhergehenden Ansprüche, **dadurch gekennzeichnet, dass** es sich bei diesem um einen Nagel handelt, der einen eine Längsachse (X) definierenden Schaft (2) und eine an dessen vorderem Ende angeordnete Spitze (3) aufweist oder aus einem solchen Schaft (2) und einer solchen Spitze (3) besteht.

4. Befestigungselement (1) nach Anspruch 3, **dadurch gekennzeichnet, dass** der Schaft (2) einen kreisrunden Querschnitt aufweist, wobei die Spitze (3) insbesondere als kegelförmige Rundspitze ausgebildet ist, wobei der Spitzenwinkel der Spitze (3) bevorzugt ≥ 36° und besser noch ≥ 40° ist, und insbesondere im Bereich von 45° und 60° liegt und bevorzugt 45° oder 60° beträgt, oder dass die Spitze (3) als eine ballistisch geformte Spitze ausgebildet ist, oder dass die Spitze (3) pyramidal geformt ist, und/oder dass an dem hinteren Ende des Schaftes (2) ein gegenüber dem Schaft (2) verbreitert ausgebildeter Kopf (10) vorgesehen ist, der bevorzugt einen kreisrunden Querschnitt aufweist, wobei der Schaft (2) und der Kopf (10) insbesondere durch einen sich zum Kopf (10) aufweitenden Übergangsbereich (11) miteinander verbunden sind, dessen ringförmige Außenfläche bevorzugt zur Längsachse (X) hin konkav gekrümmt ist, wobei der Querschnitt des Kopfes (10) insbesondere konstant ist oder sich zum hinteren freien Ende des Befestigungselementes (1) hin kontinuierlich erweitert, und/oder dass der Schaft (2) einen vorderen, einen ersten Durchmesser (D₁) aufweisenden Schaftabschnitt (3) und einen hinteren, einen zweiten Durchmesser (D₂) aufweisenden Schaftabschnitt (4) umfasst, wobei der zweite Durchmesser (D₂) größer als der erste Durchmesser (D₁) ist, und wobei die Spitze (6) am vorderen Ende des vorderen Schaftabschnitts (3) angeordnet ist.

5. Befestigungselement (1) nach Anspruch 3, **dadurch gekennzeichnet, dass** an dem hinteren Ende des Schaftes (2) ein gegenüber dem Schaft (2) verbreitert ausgebildeter Kopf (10) vorgesehen ist, dass zwischen dem Schaft (1) und dem Kopf (10) ein sich zum Kopf (10) aufweitender Übergangsbereich (11) vorgesehen ist, und dass der Kopf (10) einen sich an den Übergangsbereich (11) anschließenden, sich zum hinteren Ende des Befestigungselementes (1) aufweitend ausgebildeten Kopfabschnitt (14) aufweist, wobei der Aufweitungswinkel (γ ) des Kopfabschnitts (14) ≥ 110° ist.

6. Befestigungselement (1) nach Anspruch 5, **dadurch gekennzeichnet, dass** der Schaft (2), die Spitze (3), der Übergangsbereich (11) und der Kopf (10) gemeinsam eine Nagelvorderseite (12) sowie eine Nagelrückseite (13) definieren, die sich parallel oder im Wesentlichen parallel zueinander erstrecken, wobei der Schaft (2) und/oder die Spitze (3) und/oder der Übergangsbereich (11) und/oder der Kopf (10) insbesondere einen rechteckigen oder quadratischen Querschnitt aufweist/aufweisen, und/oder dass zumindest ein Aufweitungswinkel (γ ) des Übergangsbereichs (11) im Bereich von 20° -90° liegt, insbesondere im Bereich von 40°-60°, und/oder dass der Übergangsbereich (11) in Längsrichtung des Schaftes (2) eine Länge von wenigstens 4mm aufweist, und/oder dass der Kopf (10) einen am hinteren Ende des Befestigungselementes (1) benachbart zum sich aufweitend ausgebildeten Kopfabschnitt (14) angeordneten weiteren Kopfabschnitt (15) aufweist, der sich parallel oder im Wesentlichen parallel zueinander erstreckende Längsseiten umfasst.

7. Befestigungselement (1) nach Anspruch 5 oder 6, **dadurch gekennzeichnet, dass** der Kopf (10) insbesondere beidseitig mindestens 3mm über den Schaft (2) vorsteht, bevorzugt mindestens 5 mm.

8. Befestigungselement (1) nach einem der Ansprüche 5 bis 7, **dadurch gekennzeichnet, dass** der Spitzenwinkel (β ) der Spitze (3) kleiner als 90° ist und insbesondere im Bereich von 70°-10° liegt, bevorzugt 30° beträgt.

9. Befestigungselement (1) nach einem der Ansprüche 3 bis 8, **dadurch gekennzeichnet, dass** der Durchmesser beziehungsweise die kleinste Schaftdicke 2 mm bis 6 mm, insbesondere 3 mm bis 6 mm und bevorzugt 4 mm bis 5 mm beträgt.

10. Befestigungselement (1) nach einem der Ansprüche 3 bis 9, **dadurch gekennzeichnet, dass** der Schaft (2) über seine gesamte Länge einen konstanten Querschnitt aufweist.

11. Befestigungselement (1) nach einem der Ansprüche 3 bis 10, **dadurch gekennzeichnet, dass** der Schaft (2) mit zumindest einer Nut versehen ist.

12. Befestigungselement (1) nach einem der Ansprüche 4 bis 11, **dadurch gekennzeichnet, dass** dieses zumindest in einem zum Eintreiben in ein Werkstück vorgesehenen Bereich mit einer Beschichtung (19) beschichtet ist, insbesondere mit einer bio-basierten und biologisch abbaubaren polymeren Beschichtung (19).

13. Befestigungselementstreifen (4) zur Verwendung in einem Nagelsetzgerät, wobei der Befestigungselementstreifen (4) eine Vielzahl von Befestigungselementen (1) nach einem der Ansprüche 3 bis 12 aufweist.
